# EUROPEAN PATENT APPLICATION

(11) **EP 4 693 564 A1**
(43) Date of publication of application: **11.02.2026**
(21) Application number: 23929392.1
(22) Date of filing: 31.03.2023
(51) Int. Cl.: H01M 10/0567

(54) **ELECTROCHEMICAL DEVICE AND ELECTRONIC DEVICE COMPRISING ELECTROCHEMICAL DEVICE**

(71) Applicant: Ningde Amperex Technology Limited, Ningde, Fujian 352100 (CN)
(72) Inventor: LIU, Junfei, Ningde, Fujian 352100 (CN); ZHOU, Shaoyun, Ningde, Fujian 352100 (CN); CUI, Hui, Ningde, Fujian 352100 (CN)
(74) Representative: Icosa
(86) International application number: PCT/CN2023/085448
(87) International publication number: WO 2024/197806

(57) **Abstract**

**This application** relates to an electrochemical device and an electronic device containing the electrochemical device. The electrochemical device includes a positive electrode, a negative electrode, a separator, and an electrolyte. The positive electrode includes a positive active material. The positive active material includes aluminum. Based on a mass of the positive active material, a mass percentage of the aluminum is x%. The electrolyte includes carboxylate and fluoroethylene carbonate. Based on a mass of the electrolyte a mass percentage of the carboxylate is m%, and a mass percentage of the fluoroethylene carbonate is n%. The electrochemical device satisfies: (1) x falls within a range of 0.01 to 1.00; and (2) 0.3 ≤ m/n ≤ 55, and preferably 5 ≤ m/n ≤ 16.

## Description

### TECHNICAL FIELD

This application relates to the technical field of energy storage, and in particular, to an electrochemical device and an electronic device containing the electrochemical device.

### BACKGROUND

The concepts of carbon neutrality and carbon peaking have accelerated the development of the new energy industry. As an important part of the new energy industry, lithium batteries are developing rapidly around the world. The lithium-ion batteries have been applied in almost all consumer electronics products by virtue of the advantages such as a high energy density, no memory effect, and portability. A lithium-ion battery is prone to self-discharge during long-term storage. Especially, when the lithium-ion battery is not recharged in time after long-term use, the battery will be self-discharged continuously. The continuous self-discharge makes the lithium-ion battery over-discharged drastically, thereby resulting in gas production of the battery, adversely affecting the use of the lithium-ion battery, or even causing safety hazards.

Therefore, how to effectively alleviate the self-discharge of the lithium-ion batteries while still ensuring good performance of other metrics is a focus of research and development in the field of lithium-ion batteries.

### SUMMARY

This application provides an electrochemical device in an attempt to solve at least one problem in the related art to at least some extent.

This application provides an electrochemical device. The electrochemical device includes a positive electrode, a negative electrode, a separator, and an electrolyte. The positive electrode includes a positive active material. The positive active material includes aluminum. Based on a mass of the positive active material, a mass percentage of the aluminum is x%. The electrolyte includes carboxylate and fluoroethylene carbonate. Based on a mass of the electrolyte, a mass percentage of the carboxylate is m%, and a mass percentage of the fluoroethylene carbonate is n%. The electrochemical device satisfies: (1) x falls within a range of 0.01 to 1.00; and (2) 0.3 ≤ m/n ≤ 55, and preferably 5 ≤ m/n ≤ 16.

According to some embodiments of this application, the electrochemical device further satisfies: (3) m falls within a range of 5.0 to 55.0; and (4) n falls within a range of 1.0 to 15.0.

According to some embodiments of this application, the electrochemical device further satisfies: m+n falls within a range of 6.0 to 65.

According to some embodiments of this application, the electrochemical device further satisfies: 100x/m falls within a range of 0.2 to 20.

According to some embodiments of this application, where a Dₙ₁₀ of the positive active material is y µm, satisfying: 0.1 ≤ y ≤ 3.5.

According to some embodiments of this application, the electrochemical device further satisfies: 0.1 ≤ 4π×y³×x/23 ≤ 10, and preferably 1.0 ≤ 4π×y³×x/23 ≤ 10.

According to some embodiments of this application, the electrochemical device further satisfies: 0.1 ≤ π×y²/m ≤ 6.0.

According to some embodiments of this application, the electrolyte further includes a trinitrile compound. The trinitrile compound includes at least one of the following compounds: 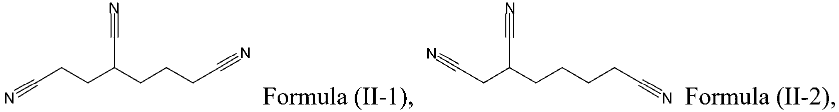 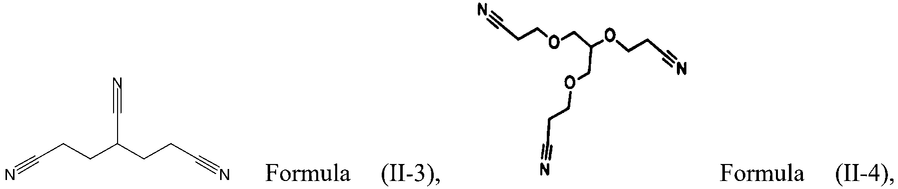 or

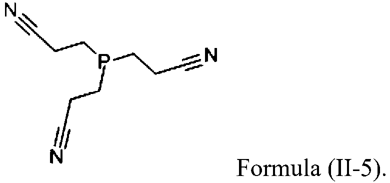

According to some embodiments of this application, a mass percentage of the trinitrile compound is c%, and c falls within a range of 0.1 to 5.

According to some embodiments of this application, the electrochemical device further satisfies: 300×c×x/27 falls within a range of 0.01 to 20.

According to some embodiments of this application, the carboxylate includes a compound represented by Formula (I):

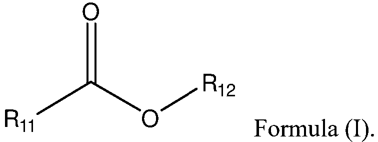

In the formula above, R₁₁ is selected from a substituted or unsubstituted C₁ to C₂ alkyl, and R₁₂ is selected from a substituted or unsubstituted C₁ to C₃ alkyl, in which a substituent for substitution is F.

According to some embodiments of this application, R₁₁ is selected from a substituted or unsubstituted C₁ to C₂ alkyl, and R₁₂ is an F-substituted C₁ to C₃ alkyl.

According to some embodiments of this application, the carboxylate is at least one selected from the following compounds: ethyl propionate, propyl propionate, ethyl acetate, propyl acetate,

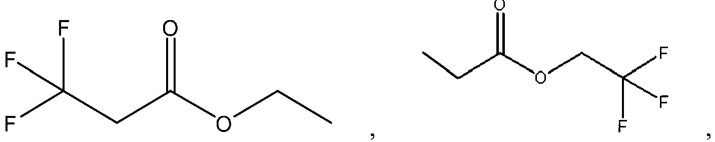

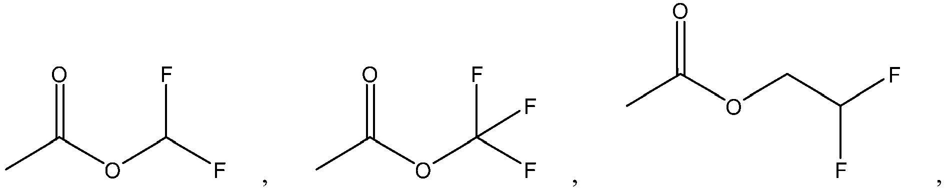

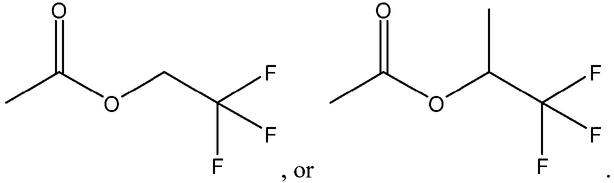

According to some embodiments of this application, the carboxylate includes at least one of: ethyl propionate (EP), propyl propionate (PP), propyl acetate, or ethyl acetate; and at least one of: 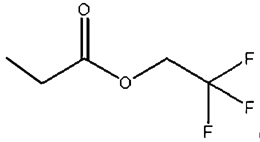 (2,2,2-trifluoroethylpropionate), 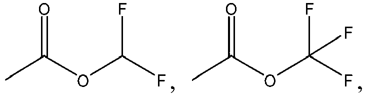 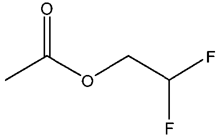 (2,2-difluoroethylacetate), 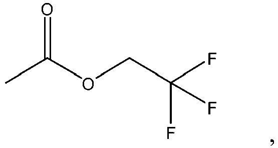 or

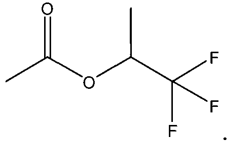

This application further provides an electronic device. The electronic device includes any one of the electrochemical devices described above.

Additional aspects and advantages of this application will be partly described or illustrated herein later or expounded through implementation of an embodiment of this application.

### DETAILED DESCRIPTION OF EMBODIMENTS

Some embodiments of this application will be described in detail below. The embodiments described herein are illustrative in nature, and are intended to enable a basic understanding of this application. No embodiment of this application is to be construed as a limitation on this application.

The terms "roughly", "substantially", "substantively", and "approximately" used herein are intended to describe and represent small variations. When used together with an event or situation, the term "approximately" may represent an example in which the event or situation occurs exactly or an example in which the event or situation occurs very approximately. For example, when used together with a numerical value, the term "approximately" may represent a variation range falling within ±10% of the numerical value, such as ±5%, ±4%, ±3%, ±2%, ±1%, ±0.5%, ±0.1%, or ±0.05% of the numerical value. For example, if a difference between two numerical values falls within ±10% of an average of the numerical values (such as ±5%, ±4%, ±3%, ±2%, ±1%, ±0.5%, ±0.1%, or ±0.05% of the average), the two numerical values may be considered to be "substantially" the same.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

In the embodiments and claims, a list of items recited by using the terms such as "at least one of", "at least one thereof", "at least one type of" or other similar terms may mean any combination of the recited items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

The term "alkyl group" is intended to be a linear saturated hydrocarbon structure having 1 to 20 carbon atoms. "Alkyl" also means a branched or cyclic hydrocarbon structure containing 3 to 20 carbon atoms. For example, an alkyl group may be an alkyl group containing 1 to 2 carbon atoms, an alkyl group containing 1 to 3 carbon atoms, an alkyl group containing 1 to 5 carbon atoms, an alkyl group containing 5 to 20 carbon atoms, an alkyl group containing 5 to 15 carbon atoms, or an alkyl group containing 5 to 10 carbon atoms. An alkyl containing a specified quantity of carbon atoms is intended to cover all geometric isomers containing the specified quantity of carbon atoms. Therefore, for example, "butyl" is intended to include n-butyl, sec-butyl, isobutyl, tert-butyl, and cyclobutyl; and "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like. In addition, the alkyl may be optionally substituted.

This application provides an electrochemical device capable of alleviating self-discharge and exhibiting excellent cycle performance, high-temperature storage performance, and low-temperature discharge performance. Specifically, this application provides a lithium-ion battery capable of alleviating self-discharge and exhibiting excellent performance.

The self-discharge of a lithium-ion battery is classed into physical self-discharge and chemical self-discharge. Physical self-discharge is mainly attributed to foreign matters and metal particles introduced during production of the lithium-ion battery, and can be alleviated by strict control of the process. Chemical self-discharge is mainly attributed to the instability of a solid electrolyte interphase (SEI) on the surface of the negative electrode and side reactions of the electrolyte on the surface of the positive electrode, and, as found by the applicant hereof, can be alleviated by modifying the positive electrode material and optimizing the electrolyte.

By modifying the positive electrode material and optimizing the electrolyte at the same time, this application enhances the stability of the positive electrode material, reduces side reactions, and provides a more effective electrolyte additive for stabilizing the SEI on the surface of the negative electrode. Therefore, the electrochemical device of this application can effectively reduce the chemical self-discharge and further enhance the overall performance. This application evaluates the self-discharge of the electrochemical device with the open-circuit voltage by the voltage drop test of of the electrochemical device fully discharged and stored for a specified period. The higher the open-circuit voltage, the lower the self-discharge.

### I. Electrochemical Device

This application provides an electrochemical device. The electrochemical device includes a positive electrode, a negative electrode, a separator, and an electrolyte. The positive electrode includes a positive active material. The positive active material includes aluminum (Al). Based on a mass of the positive active material, a mass percentage of the aluminum is x%. The electrolyte includes carboxylate and fluoroethylene carbonate (FEC). Based on a mass of the electrolyte, a mass percentage of the carboxylate is m%, and a mass percentage of the fluoroethylene carbonate is n%. The electrochemical device satisfies: (1) x falls within a range of 0.01 to 1.00; and (2) 0.3 ≤ m/n ≤ 55, and preferably 5 ≤ m/n ≤ 16.

The carboxylate is of a low viscosity, and exhibits good low-temperature discharge performance. However, the carboxylate is less resistant to redox, and dissolves or disrupts the SEI constituents of the negative electrode, thereby leading to a drop in the open-circuit voltage of the electrochemical device fully discharged and stored for a period.

The FEC helps to form a more stable SEI on the surface of the negative electrode, and can alleviate the problem of a drop in the open-circuit voltage of the electrochemical device fully discharged and stored for a period. However, at the same time, the FEC decomposes electrochemically on the surface of the positive electrode to generate fluoride ions.

The Al element in the positive active material can react with the generated fluoride ions to generate AlF₃ or LiAlF₄. The generated AlF₃ or LiAlF₄ forms a fast-ion conductor layer on the surface of the positive active material to reduce the side reactions of the carboxylate on the surface of the positive active material, thereby effectively stabilizing the surface of the positive active material, reducing the impact caused by the dissolution of the metal element in the positive active material onto the stability of the SEI of the negative electrode, and in turn, alleviating the problem of a drop in the open-circuit voltage of the electrochemical device fully discharged and stored for a period.

When the content of the FEC is relatively low, the FEC is not enough to react and protect the stability of the SEI film, and consequently, the carboxylate keeps decomposing and reacting continuously. However, when the content of the FEC is excessively high, the FEC undergoes thermal decomposition at a high temperature to generate hydrogen fluoride (HF), thereby accelerating the side reactions of the electrolyte.

The applicant hereof finds that, when the content of the Al element in the positive active material, the content of the carboxylate in the electrolyte, and the content of the FEC in the electrolyte satisfy a specified relationship, the three constituents can produce a synergistic effect to effectively solve the problem of fast fading of voltage of the electrochemical device after a period of storage caused by self-discharge and achieve superior low-temperature discharge performance at the same time.

In some embodiments, based on the mass of the positive active material, the mass percentage x% of the Al element may be approximately 0.01% to approximately 1.00%. In some embodiments, based on the mass of the positive active material, the mass percentage x% of aluminum may be approximately 0.01%, approximately 0.05%, approximately 0.1%, approximately 0.2%, approximately 0.3%, approximately 0.4%, approximately 0.5%, approximately 0.6%, approximately 0.7%, approximately 0.8%, approximately 0.9%, approximately 1.00%, or a value falling within a range formed by any two thereof. For example, the range is approximately 0.01% to approximately 0.5%, approximately 0.1% to approximately 1.00%, approximately 0.1% to approximately 0.5%, approximately 0.01% to approximately 1.00%, approximately 0.4% to approximately 1.00%, or the like.

In some embodiments, a ratio of the mass percentage m% of the carboxylate to the mass percentage n% of the FEC, denoted as m/n, may be greater than or equal to approximately 0.3 and less than or equal to approximately 55. In some embodiments, the m/n ratio may be approximately 0.3, approximately 0.8, approximately 1, approximately 2, approximately 2.3, approximately 2.8, approximately 3, approximately 3.5, approximately 4, approximately 4.3, approximately 5, approximately 5.5, approximately 5.7, approximately 6, approximately 7, approximately 8, approximately 9, approximately 10, approximately 11, approximately 12, approximately 13, approximately 14, approximately 14.3, approximately 15, approximately 15.5, approximately 15.7, approximately 16, approximately 17, approximately 17.5, approximately 18, approximately 19, approximately 20, approximately 25, approximately 30, approximately 35, approximately 40, approximately 45, approximately 50, approximately 55, or a value falling within a range formed by any two thereof. For example, the range is approximately 0.3 to approximately 17.5, approximately 0.3 to approximately 20, approximately 2, approximately 3.5 to approximately 17.5, approximately 3.5 to approximately 20, approximately 5 to approximately 16, approximately 5 to approximately 20, approximately 10 to approximately 55, or the like.

In some embodiments, based on the mass of the electrolyte, the mass percentage m% of the carboxylate may be approximately 5.0% to approximately 55.0% (that is, m is approximately 5.0 to approximately 55.0). In some embodiments, based on the mass of the electrolyte, the mass percentage m% of the carboxylate is approximately 5.0%, approximately 10.0%, approximately 15.0%, approximately 20.0%, approximately 25.0%, approximately 30.0%, approximately 35.0%, approximately 40.0%, approximately 45.0%, approximately 50.0%, approximately 55.0%, or a value falling within a range formed by any two thereof. For example, the range is approximately 5.0% to approximately 25.0%, approximately 5.0% to approximately 35.0%, approximately 15.0% to approximately 35.0%, approximately 15.0% to approximately 55.0%, approximately 35.0% to approximately 55.0%, or the like.

In some embodiments, based on the mass of the electrolyte, the mass percentage n% of the FEC may be approximately 1.0% to approximately 15.0% (that is, n is approximately 1.0 to approximately 15.0). In some embodiments, based on the mass of the electrolyte, the mass percentage n% of the FEC may be approximately 1.0%, approximately 2.0%, approximately 3.0%, approximately 3.5%, approximately 4.0%, approximately 5.0%, approximately 6.0%, approximately 7.0%, approximately 8.0%, approximately 9.0%, approximately 10.0%, approximately 11.0%, approximately 12.0%, approximately 13.0%, approximately 14.0%, approximately 15.0%, or a value falling within a range formed by any two thereof. For example, the range is approximately 1.0% to approximately 10.0%, approximately 2.0% to approximately 10.0%, approximately 2.0% to approximately 15.0%, approximately 3.5% to approximately 10.0%, approximately 3.5% to approximately 15.0%, or approximately 5% to approximately 15.0%, or the like.

In some embodiments, the electrochemical device further satisfies: (3) m falls within a range of 5.0 to 55.0; and (4) n falls within a range of 1.0 to 15.0.

In some embodiments, the electrochemical device further satisfies: m+n falls within a range of approximately 6.0 to approximately 65. In some embodiments, m+n may be approximately 6.0, approximately 7.0, approximately 8.0, approximately 9.0, approximately 10.0, approximately 15.0, approximately 18.5, approximately 20.0, approximately 23.0, approximately 23.5, approximately 25.0, approximately 30.0, approximately 35.0, approximately 37.0, approximately 38.5, approximately 40.0, approximately 45.0, approximately 50.0, approximately 55.0, approximately 58.5, approximately 60.0, approximately 65.0, or a value falling within a range formed by any two thereof. For example, the range is approximately 6.0 to approximately 30, approximately 18.5 to approximately 65, approximately 18.5 to approximately 58.5, approximately 38.5 to approximately 58.5, approximately 30 to approximately 65, or the like.

In some embodiments, the electrochemical device further satisfies: 100x/m falls within a range of approximately 0.2 to approximately 20. In some embodiments, the electrochemical device further satisfies: 100x/m is approximately 0.2, approximately 0.28, approximately 0.3, approximately 0.4, approximately 0.5, approximately 0.6, approximately 0.7, approximately 0.73, approximately 0.8, approximately 0.9, approximately 1.0, approximately 1.14, approximately 1.5, approximately 1.6, approximately 1.71, approximately 2.0, approximately 2.5, approximately 2.67, approximately 2.86, approximately 3, approximately 3.43, approximately 3.5, approximately 4, approximately 5, approximately 6, approximately 7, approximately 8, approximately 9, approximately 10, approximately 13, approximately 15, approximately 18, approximately 20, or a value falling within a range formed by any two thereof. For example, the range is approximately 0.2 to approximately 8, approximately 0.2 to approximately 3.43, approximately 1.14 to approximately 8, approximately 1.14 to approximately 20, approximately 8 to approximately 20, or the like.

In some embodiments, the positive active material is selected from Al-doped lithium cobalt oxide, Al-doped lithium nickel-cobalt-manganese (NCM) ternary material, Al-doped lithium iron phosphate, Al-doped lithium manganese oxide, or any combination thereof. In some embodiments, the Al is added by coating, the doping percentage of Al in the positive active material is controlled.

In some embodiments, the positive active material is of particles, and a Dₙ₁₀ of the positive active material is y µm, satisfying: 0.1 ≤ y ≤ 3.5. In some embodiments, y may be approximately 3.5, approximately 3, approximately 2.5, approximately 2, approximately 1.5, approximately 1, approximately 0.5, approximately 0.1, or a value falling within a range formed by any two thereof. For example, the range is approximately 0.1 to approximately 2, approximately 0.5 to approximately 3, approximately 0.5 to approximately 2, approximately 0.5 to approximately 2.5, approximately 0.1 to approximately 3, approximately 1 to approximately 3.5, or the like.

In some embodiments, the electrochemical device may further satisfy: 0.1 ≤ 4π×y³×x/23 ≤ 10. In some embodiments, 4π×y³×x/23 may be approximately 0.1, approximately 0.5, approximately 0.8, approximately 0.9, approximately 1.0, approximately 1.5, approximately 1.7, approximately 1.75, approximately 2, approximately 3, approximately 3.5, approximately 4, approximately 5, approximately 5.8, approximately 5.9, approximately 6, approximately 7, approximately 8, approximately 9, approximately 9.3, approximately 9.4, approximately 10, or a value falling within a range formed by any two thereof. For example, the range is approximately 0.1 to approximately 8, approximately 0.1 to approximately 9.4, approximately 0.5 to approximately 10, approximately 0.5 to approximately 5, approximately 1 to approximately 9, approximately 1 to approximately 10, approximately 0.9 to approximately 9.4, approximately 5 to approximately 10, or the like.

In some embodiments, the electrochemical device may further satisfy: 0.1 ≤ π×y²/m ≤ 6.0. In some embodiments, π×y²/m may be approximately 0.1, approximately 0.3, approximately 0.36, approximately 0.4, approximately 0.5, approximately 0.6, approximately 0.7, approximately 0.8, approximately 0.9, approximately 1.0, approximately 1.1, approximately 1.5, approximately 1.8, approximately 2.0, approximately 2.5, approximately 2.8, approximately 3.0, approximately 3.5, approximately 3.8, approximately 4.0, approximately 4.5, approximately 4.8, approximately 5.0, approximately 5.5, approximately 6.0, or a value falling within a range formed by any two thereof. For example, the range is approximately 0.1 to approximately 1.1, approximately 0.2 to approximately 1.1, approximately 0.3 to approximately 1.1, approximately 0.8 to approximately 1.1, approximately 0.8 to approximately 6, approximately 0.2 to approximately 6, approximately 1 to approximately 6, or the like.

In some embodiments, the carboxylate in the electrolyte includes a compound represented by Formula (I):

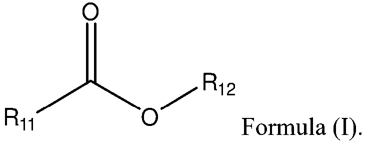

In the formula above, R₁₁ is selected from a substituted or unsubstituted C₁ to C₂ alkyl, and R₁₂ is selected from a substituted or unsubstituted C₁ to C₃ alkyl, in which a substituent for substitution is F.

In some embodiments, R₁₁ is selected from a substituted or unsubstituted C₁ to C₂ alkyl, and R₁₂ is an F-substituted C₁ to C₃ alkyl.

In some embodiments, reference to substitution means substituting by 1, 2, or 3 substituents.

In some embodiments, the carboxylate includes at least one of the following compounds: ethyl propionate (EP), propyl propionate (PP), propyl acetate, ethyl acetate, 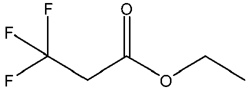 (3,3,3-trifluoroethyl propionate), 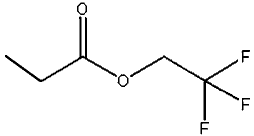 (2,2,2-trifluoroethyl propionate), 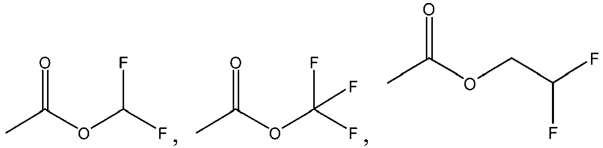 (2,2-difluoroethyl acetate).

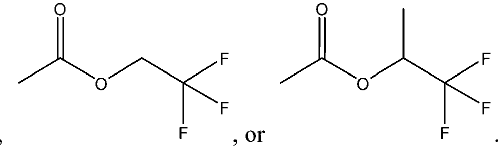

In some embodiments, the carboxylate includes at least one of: ethyl propionate (EP), propyl propionate (PP), propyl acetate, ethyl acetate; and includes at least one of: fluorine-substituted carboxylate, 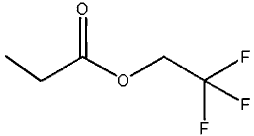 (2,2,2-trifluoroethyl propionate), 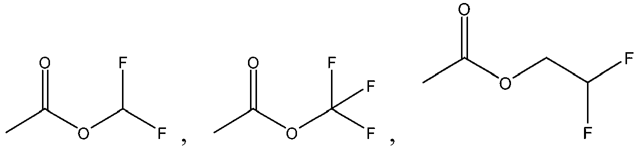 (2,2-difluoroethyl acetate), 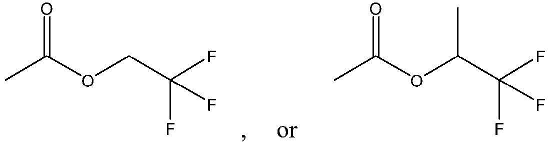 . In some embodiments, the 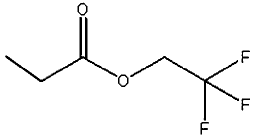 (2,2,2-trifluoroethyl propionate), 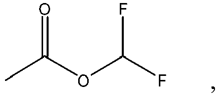 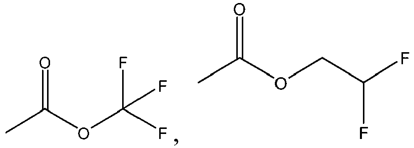 (2,2-difluoroethyl acetate), 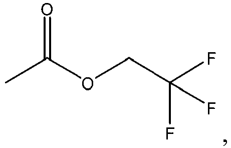 or 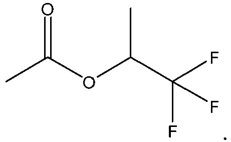 In some embodiments, based on the mass of the electrolyte, the mass percentage of the fluorine-substituted carboxylate is 1% to 30%. In some embodiments, based on the mass of the electrolyte, the mass percentage of the fluorine-substituted carboxylate is 1% to 10%.

The applicant finds that, when containing a fluorine-substituted compound, the carboxylate improves the low-temperature discharge performance of the electrochemical device. In some embodiments, R₁₁ is selected from a C₁ to C₂ alkyl, and R₁₂ is selected from a substituted or unsubstituted C₁ to C₃ alkyl, in which a substituent for substitution is F. When R₁₂ includes a fluorine atom, the low-temperature discharge performance and the storage performance of the electrochemical device in a fully discharged state are both improved significantly. A possible reason for the improvement is: the charge distribution in the carboxylate is affected by the fluorine substitution, and the carboxylate is not prone to side reactions on the surfaces of the positive and negative electrodes in a low-temperature discharge process and under a low-voltage condition, thereby further improving the stability of the electrolyte.

In some embodiments, the electrolyte may further include a trinitrile compound. The trinitrile compound includes at least one of the following compounds: 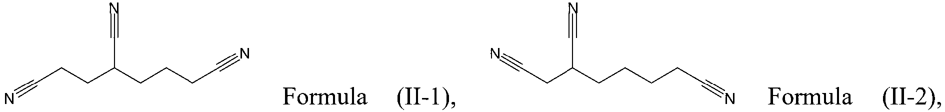 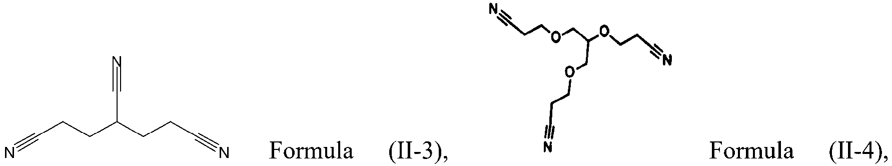 or

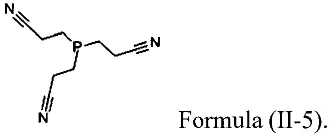

In some embodiments, a mass percentage of the trinitrile compound is c%, and c falls within a range of approximately 0.1 to approximately 5. In some embodiments, c may be approximately 0.1, approximately 0.5, approximately 1, approximately 1.5, approximately 2, approximately 3, approximately 3.5, approximately 4, approximately 4.5, approximately 4.95, or a value falling within a range formed by any two thereof. For example, the range is approximately 0.1 to approximately 4.95, approximately 1 to approximately 4.95, approximately 1 to approximately 5, or approximately 1 to approximately 3, approximately 3 to approximately 5, or the like.

In some embodiments, the electrochemical device may further satisfy: 300×c×x/27 falls within a range of approximately 0.01 to approximately 20. In some embodiments, 300×c×x/27 may be approximately 0.01, approximately 0.05, approximately 0.1, approximately 0.4, approximately 0.5, approximately 1, approximately 1.1, approximately 2.0, approximately 3.0, approximately 4.0, approximately 4.4, approximately 5.0, approximately 6.0, approximately 7.0, approximately 8.0, approximately 9.0, approximately 10.0, approximately 11.0, approximately 12.0, approximately 13.0, approximately 13.3, approximately 14.0, approximately 15.0, approximately 16.0, approximately 17.0, approximately 18.0, approximately 19.0, approximately 20.0, or a value falling within a range formed by any two thereof. For example, the range is approximately 0.01 to approximately 13.3, approximately 0.1 to approximately 15, approximately 0.4 to approximately 20, approximately 4.4 to approximately 10, approximately 4.4 to approximately 20, approximately 13.3 to approximately 20, or the like.

In some embodiments, the positive electrode includes a positive current collector and a positive active material layer. The positive active material layer includes the Al-containing positive active material. The positive current collector includes two surfaces opposite to each other in a thickness direction of the current collector. The positive active material layer is disposed on at least one surface of the positive current collector.

In some embodiments, the positive active material layer further includes a binder. The binder strengthens bonding between particles of the positive active material, and strengthens bonding between the positive active material and a positive current collector.

In some embodiments, the binder includes, but is not limited to, at least one of styrene-butadiene rubber (SBR), water-based acrylic resin, carboxymethyl cellulose (CMC), polyvinylidene difluoride (PVDF), polytetrafluoroethylene (PTFE), polyvinyl butyral (PVB), poly(ethylene-co-vinyl acetate) (EVA), or polyvinyl alcohol (PVA). The binder may be selected as actually required.

In some embodiments, based on the mass of the positive active material layer, the mass percentage of the binder is less than or equal to 2.0%, so as to achieve a relatively low positive electrode film resistance. In some embodiments, based on the mass of the positive active material layer, the mass percentage of the binder is approximately 2.0%, approximately 1.8%, approximately 1.5%, approximately 1.2%, approximately 1.0%, approximately 0.8%, approximately 0.5%, approximately 0.3%, approximately 0.1%, or a value falling within a range formed by any two thereof. For example, the range is approximately 0.1% to approximately 2.0%, approximately 0.5% to approximately 2.0%, approximately 0.1% to approximately 1.0%, or approximately 1.0% to approximately 2.0%.

In some embodiments, the positive active material layer further includes a conductive agent. The conductive agent includes, but is not limited to, at least one of graphite, conductive carbon black, superconductive carbon, acetylene black, carbon black, Ketjen black, carbon dots, carbon nanotubes, graphene, or carbon nanofibers. The conductive agent may be selected as actually required.

In some embodiments, based on the mass of the positive active material layer, the mass percentage of the conductive agent is greater than or equal to 0.5%, so as to achieve a relatively low positive electrode film resistance. In some embodiments, based on the mass of the positive active material layer, the mass percentage of the conductive agent is greater than or equal to 0.5%, greater than or equal to 1.0%, greater than or equal to 1.5%, or the like.

In some embodiments, the positive current collector may be, but is not limited to, a metal foil or a porous metal sheet, for example, a foil or porous sheet of metals such as aluminum, copper, nickel, titanium, or silver, or an alloy thereof, such as aluminum foil.

In some embodiments, the thickness of the positive current collector is approximately 5 µm to approximately 20 µm, for example, approximately 5 µm, approximately 6 µm, approximately 7 µm, approximately 8 µm, approximately 10, approximately 12 µm, approximately 14 µm, approximately 16 µm, approximately 18 µm, approximately 20 µm, or a value falling within a range formed by any two thereof. For example, the range is approximately 6 µm to 18 µm, or approximately 8 µm to approximately 16 µm.

In some embodiments, the positive active material layer may be made by performing the following operations: dry-mixing the positive active material and the binder (as necessary, in addition to a conductive material and a thickener) and making the mixture into a sheet, and crimping the obtained sheet onto the positive current collector; or, dissolving or dispersing such materials into a liquid medium to form a slurry, coating the positive current collector with the slurry, and drying the slurry.

In some embodiments, the positive electrode may be prepared by a preparation method known in the art. For example, the positive electrode may be obtained by the following method: mixing a positive active material, a conductive material, and a binder in a solvent to prepare an active material composite, and coating the positive current collector with the active material composite. In some embodiments, the solvent may include, but is not limited to, N-methyl-pyrrolidone (NMP).

In some embodiments, the negative electrode may be a metal lithium sheet, or may include a negative current collector and a negative active material layer disposed on at least one surface of the negative current collector.

In some embodiments, the negative active material layer includes a negative active material, and optionally includes a conductive agent, a binder, and a thickener.

In some embodiments, the negative active material may include one or more of natural graphite, artificial graphite, mesocarbon microbead (MCMB), hard carbon, soft carbon, silicon, a silicon-carbon composite, SiO, a Li-Sn alloy, a Li-Sn-O alloy, Sn, SnO, SnO₂, spinelstructured lithium titanium oxide Li₄Ti₅O₁₂, a Li-Al alloy, or metallic lithium.

In some embodiments, the conductive agent may include one or more of graphite, superconductive carbon, acetylene black, carbon black, Ketjen black, carbon dots, carbon nanotubes, graphene, or carbon nanofibers.

In some embodiments, the binder may be one or more of styrene-butadiene rubber, polyvinylidene difluoride, polytetrafluoroethylene, polyvinyl butyral, water-based acrylic resin, carboxymethyl cellulose, or polyacrylic acid (PAA).

In some embodiments, the thickener may be carboxymethyl cellulose.

The negative electrode in the electrochemical device of this application is not limited to the above materials. Other materials suitable for use as a negative active material, a conductive agent, a binder, or a thickener of a lithium-ion battery may also be applied herein.

The negative current collector may be made of a metal foil or a porous metal sheet or another material, for example, a foil or porous plate made of metal such as copper, nickel, titanium, or iron, or an alloy thereof, such as a copper foil.

The negative electrode may be prepared by a conventional method in this field. Typically, a method for preparing the negative electrode plate includes: dispersing the negative active material and optionally the conductive agent, the binder, and the thickener in a solvent such as N-methylpyrrolidone or deionized water to form a homogeneous negative electrode slurry, coating a negative current collector with the negative electrode slurry, and performing steps such as drying and cold-pressing to obtain a negative electrode plate.

The separator in the electrochemical device of this application is not particularly limited, and may be any well-known porous-structured separator that is electrochemically stable and chemically stable, for example, may be a single-layer or multi-layer film that is one or more of glass fiber, non-woven fabric, polyethylene (PE), polypropylene (PP), and polyvinylidene difluoride.

The electrolyte in the electrochemical device of this application may include an organic solvent, an electrolyte lithium salt, and additives in addition to the carboxylate and the FEC. The types of the organic solvent and the electrolyte lithium salt are not particularly limited herein, and may be selected as actually required.

In some embodiments, the organic solvent may be at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), vinylene carbonate (VC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). In some embodiments, the organic solvent includes at least two of the above compounds.

In some embodiments, the electrolyte lithium salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

In some embodiments, the electrolyte further optionally includes other additives. The types of other additives may be any additives suitable for use in a lithium-ion battery, and may be selected as actually required, without being particularly limited herein. In some embodiments, the additive may be one or more of vinyl ethylene carbonate (VEC), succinonitrile (SN), adiponitrile (ADN), 1,3-propene sultone (PST), sulfonate cyclic quaternary ammonium salt, tris(trimethylsilane)phosphate (TMSP), or tris(trimethylsilane)borate (TMSB).

The electrolyte in the electrochemical device of this application may be prepared by a conventional method in this field. For example, the electrolyte may be obtained by mixing well an organic solvent, an electrolyte lithium salt, fluoroethylene carbonate, and another optional additive. The sequence of the constituents added is not particularly limited herein. For example, the electrolyte may be obtained by adding an electrolyte lithium salt, fluoroethylene carbonate, and another optional additive into an organic solvent and mixing the mixture well. The electrolyte lithium salt may be added into the organic solvent first, and then the fluoroethylene carbonate and another optional additive are separately or simultaneously added into the organic solvent.

The electrochemical device of this application may be prepared by a conventional method in this field. For example, a battery cell may be obtained by stacking the positive electrode, the separator, and the negative electrode in sequence in such a way that the separator is located between the positive electrode and the negative electrode to serve a function of separation, or may be obtained by winding the stacked structure; and the battery cell is put into a packaging shell, and the packaging shell is filled with an electrolyte and sealed to obtain an electrochemical device.

### II. Electronic Device

The electrochemical device described in this application is applicable to electronic devices in various fields.

The electrochemical device according to this application may be used for purposes not particularly limited, and may be used for any purpose known in the prior art. In an embodiment, the electrochemical device according to this application is applicable to, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### III. Embodiments

The following describes this application in further detail with reference to embodiments and comparative embodiments. However, to the extent not departing from the essence of this application, this application is not limited to such embodiments.

### Preparing a positive active material

The positive active material used in the embodiments and the comparative embodiments is LiCoAlₓO₂, in which the doping percentage of Al is controlled by a coating manner, and the Dₙ₁₀ of the positive active material is controlled by a sintering temperature and a sintering time, thereby obtaining different positive active materials.

### Preparing a lithium-ion battery

### (1) Preparing a positive electrode plate

Mixing the positive active material, conductive carbon black, and polyvinylidene difluoride at a mass ratio of 97: 1.4: 1.6, adding N-methyl-pyrrolidone, and stirring the mixture well with a vacuum mixer to obtain a positive electrode slurry, where the solid content of the positive electrode slurry is 72 wt%; coating a positive current collector aluminum foil with the positive electrode slurry; oven-drying the coated aluminum foil at 85 °C; and performing cold-calendering, cutting, and slitting, and then drying the foil for 4 hours under an 85 °C vacuum condition to obtain a positive electrode plate.

### (2) Preparing a negative electrode plate

Mixing the artificial graphite, conductive carbon black, sodium carboxymethyl cellulose, and styrene-butadiene rubber at a mass ratio of 96: 2: 0.8: 1.2. Adding deionized water, and stirring the mixture with a vacuum mixer to obtain a negative electrode slurry in which a solid content is 54 wt%. Coating a negative current collector copper foil with the negative electrode slurry evenly to make the coating areal density be 7.8 mg/cm². Oven-drying the coated copper foil at 85 °C, and performing cold-calendering, cutting, and slitting, and drying the foil for 12 hours under a 120 °C vacuum condition to obtain a negative electrode plate.

### (3) Preparing an electrolyte

Mixing ethylene carbonate (EC), diethyl carbonate (DEC), and carboxylate in a dry argon atmosphere glovebox, in which the mass percentage of the EC is 30%, the mass percentage of the DEC is 1-42.5%-m%-n%-c%, and the mass percentage of the carboxylate is m%. Subsequently, adding a lithium salt LiPF₆, dissolving lithium salt and mixing well, and adding n % FEC and c% trinitrile compound at the mass percentage specified in the tables into the solution, and mixing well to obtain an electrolyte. The contents and types of the carboxylate, the FEC, and the trinitrile compound in the electrolyte are shown in the tables. The mass percentage of the LiPF₆ in the electrolyte is 12.5%.

### (4) Preparing a separator

Selecting a 9 µm-thick polyethylene (PE) film, coating the PE film with a PVDF slurry and an inorganic particle slurry (in which a mass ratio between flake boehmite and Al₂O₃ is 70: 30), and oven-drying the PE film to obtain a separator, in which the coating thickness is 3 µm and the porosity is 55%.

### (5) Preparing a lithium-ion battery

Stacking the positive electrode plate, the separator, and the negative electrode plate in such a sequence that the separator is located between the positive electrode plate and the negative electrode plate to serve a separation function. Winding the stacked structure to obtain an bare cell. Welding tabs, and putting the bare cell into an aluminum plastic film outer package. Injecting the prepared electrolyte into the dried bare cell, and performing steps such as vacuum sealing, standing, chemical formation (charging the battery cell at a constant current of 0.02 C until the voltage reaches 3.3 V, and then charging the battery cell at a constant current of 0.1 C until the voltage reaches 3.6 V), shaping, and capacity test to obtain a pouch-type lithium-ion battery.

### Test Methods

### (1) Testing a voltage drop of a lithium-ion battery fully discharged and stored for a period

Discharging a lithium-ion battery at a 0.2 C rate in a 25 °C environment until the voltage reaches 3.0 V, and then maintaining the lithium-ion battery in the 25 °C environment for 365 days, and then measuring the open-circuit voltage of the lithium-ion battery at this time, denoted as OCV.

### (2) Testing the low-temperature discharge

Putting a lithium-ion battery into a high- and low-temperature chamber, adjusting the temperature of the chamber to 25 °C, and then charging the battery at a constant current of 0.2 C until the voltage reaches 4.35 V, and then charging the battery at a constant voltage until the current drops to a cut-off current. Subsequently, discharging the battery at a current of 0.2 C until the voltage drops to 3.0 V, and recording the discharge capacity at this time as C₂₅ (mAh). Afterward, charging the battery at a constant current of 0.2 C until the voltage reaches 4.35 V, and then charging the battery at a constant voltage until the current drops to a cut-off current. Adjusting the temperature of the high- and low-temperature chamber to -20 °C, discharging the battery at a constant current of 0.2 C until the voltage drops to 3.0 V, recording the discharge capacity at this time as C₋₂₀ (mAh), and calculating the low-temperature discharge capacity retention rate as C₋₂₀/C₂₅.

### (3) Testing the first-cycle Coulombic efficiency

In a process of preparing a lithium-ion battery, the total capacity of the lithium-ion battery measured upon completion of initially charging to a voltage of 4.35 V is denoted as C₀, and the capacity of the lithium-ion battery measured upon completion of initially discharging to a voltage of 3.0 V is denoted as D₀, and the first-cycle Coulombic efficiency is calculated as D₀/C₀.

### (4) High-temperature cycle test

Putting a lithium-ion battery in a 45 °C muffle oven, charging the battery at a constant current of 1 C until the voltage reaches 4.35 V, and then charging the battery at a constant voltage until a cut-off current. Leaving the battery to stand for 15 minutes, and then discharging the battery at a constant current of 1 C until the voltage reaches 3.0 V, and then leaving the battery to stand for 15 minutes, thereby completing one charge-discharge cycle. Denoting the capacity of the battery at the end of the first circle as C₁, denoting the capacity of the battery at the end of the 800^{th} circle as C₈₀₀, and calculating the high-temperature cycle capacity retention rate as C₈₀₀/C₁.

### (5) High-temperature full-charge storage test

Charging a lithium-ion battery at a constant current of 0.2 C until the voltage reaches 4.35 V, and then charging the battery at a constant voltage until a predefined cut-off current, and measuring the initial thickness of the battery, denoted as d₁. Subsequently, putting the lithium-ion battery into a 60 °C muffle oven, keeping the battery in the muffle oven for 30 days, and then measuring the thickness of the battery, denoted as d₂. Calculating the high-temperature full-charge storage thickness change rate as d₂/d₁ - 1.

### Test Results

The lithium-ion batteries in the embodiments and comparative embodiments are prepared by the above preparation method. The Al mass percentage in the positive active material, the mass percentage of the carboxylate in the electrolyte, and the mass percentage of the FEC in the electrolyte are shown in Table 1 below. The voltage drop of the prepared lithium-ion battery fully discharged and stored for a period is tested, and the low-temperature discharge performance of the battery is tested. The test results are shown in Table 1. Dₙ₁₀ of the positive active materials in all the embodiments and comparative embodiments in Table 1 is 2 µm.

**Table 1**

| | mass percenta ge of Al (x) (%) | Carboxylate | | Content of FEC (n) (%) | m/n | m+n | 100x/m | 4π×y³×x/23 | π×y²/m | OCV of battery fully discharged and stored for a period (V) | -20 °C low-temperature discharge capacity retention rate |
|---|---|---|---|---|---|---|---|---|---|---|---|
| | | Substance | mass percenta ge m (%) | | | | | | | | |
| Embodiment 1-1 | 0.01 | PP+EP | 15+20 | 3.5 | 10 | 38.5 | 0.03 | 0.04 | 0.36 | 2.205 | 63.20% |
| Embodiment 1-2 | 0.1 | PP+EP | 15+20 | 3.5 | 10 | 38.5 | 0.29 | 0.44 | 0.36 | 2.213 | 64.50% |
| Embodiment 1-3 | 0.4 | PP+EP | 15+20 | 3.5 | 10 | 38.5 | 1.14 | 1.75 | 0.36 | 2.238 | 66.10% |
| Embodiment 1-4 | 0.6 | PP+EP | 15+20 | 3.5 | 10 | 38.5 | 1.71 | 2.62 | 0.36 | 2.252 | 66.50% |
| Embodiment 1-5 | 1 | PP+EP | 15+20 | 3.5 | 10 | 38.5 | 2.86 | 4.37 | 0.36 | 2.260 | 66.40% |
| Embodiment 1-6 | 0.4 | PP+EP | 2+3 | 16.5 | 0.3 | 21.5 | 8 | 1.75 | 2.51 | 2.268 | 60.10% |
| Embodiment 1-7 | 0.4 | PP+EP | 5+15 | 3.5 | 5.7 | 23.5 | 2 | 1.75 | 0.63 | 2.253 | 63.60% |
| Embodiment 1-8 | 0.4 | PP+EP | 20+35 | 3.5 | 15.7 | 58.5 | 0.73 | 1.75 | 0.23 | 2.189 | 66.90% |
| Embodiment 1-9 | 0.4 | PP | 15 | 3.5 | 4.3 | 18.5 | 2.67 | 1.75 | 0.84 | 2.255 | 60.80% |
| Embodiment 1-10 | 0.4 | PP | 35 | 3.5 | 10 | 38.5 | 1.14 | 1.75 | 0.36 | 2.240 | 63.80% |
| Embodiment 1-11 | 0.4 | PP | 55 | 3.5 | 15.7 | 58.5 | 0.73 | 1.75 | 0.23 | 2.225 | 66.30% |
| Embodiment 1-13 | 0.4 | EP | 20 | 3.5 | 5.7 | 23.5 | 2 | 1.75 | 0.63 | 2.242 | 65.10% |
| Embodiment 1-14 | 0.4 | EP | 50 | 3.5 | 14.3 | 53.5 | 0.8 | 1.75 | 0.25 | 2.237 | 67.00% |
| Embodiment 1-15 | 0.4 | EP | 55 | 3.5 | 15.7 | 58.5 | 0.73 | 1.75 | 0.23 | 2.195 | 67.10% |
| Embodiment 1-16 | 0.4 | PP+EP+2,2-difluoroethyl acetate | 10+20+5 | 3.5 | 10 | 38.5 | 1.14 | 1.75 | 0.36 | 2.258 | 67.30% |
| Embodiment 1-17 | 0.4 | PP+EP | 25+30 | 1 | 55 | 56 | 0.73 | 1.75 | 0.23 | 2.188 | 65.20% |
| Embodiment 1-18 | 0.4 | PP+EP | 15+20 | 2 | 17.5 | 37 | 1.14 | 1.75 | 0.36 | 2.211 | 66.20% |
| Embodiment 1-19 | 0.4 | PP+EP | 15+20 | 5 | 7 | 40 | 1.14 | 1.75 | 0.36 | 2.241 | 65.90% |
| Embodiment 1-20 | 0.4 | PP+EP | 15+20 | 10 | 3.5 | 45 | 1.14 | 1.75 | 0.36 | 2.257 | 65.60% |
| Embodiment 1-21 | 0.4 | PP+EP | 15+20 | 15 | 2.3 | 50 | 1.14 | 1.75 | 0.36 | 2.261 | 65.20% |
| Embodiment 1-22 | 0.4 | PP+EP | 2+3 | 15 | 0.3 | 20 | 8 | 1.75 | 2.51 | 2.285 | 62.10% |
| Embodiment 1-23 | 0.4 | PP+EP | 1+1 | 3.5 | 0.6 | 5.5 | 20 | 1.75 | 6.28 | 2.270 | 60.05% |
| Embodiment 1-24 | 0.4 | PP+EP+3,3,3-trifluoroethyl propionate | 10+20+5 | 3.5 | 10 | 38.5 | 1.14 | 1.75 | 0.36 | 2.236 | 66.30% |
| Embodiment 1-25 | 0.4 | PP+EP+2,2,2-trifluoroethyl propionate | 10+20+5 | 3.5 | 10 | 38.5 | 1.14 | 1.75 | 1.75 | 2.255 | 67.20% |
| Comparative Embodiment 1-1 | 0.4 | PP+EP | 20+35 | 0.8 | 68.8 | 55.8 | 0.73 | 1.75 | 0.23 | 2.103 | 58.50% |
| Comparative Embodiment 1-2 | 0.4 | PP+EP | 2+3 | 18 | 0.28 | 23 | 8 | 1.75 | 2.51 | 1.190 | 56.80% |
| Comparative Embodiment 1-3 | 0.005 | PP+EP | 15+20 | 3.5 | 10 | 38.5 | 0.01 | 0.02 | 0.36 | 1.195 | 59.40% |
| Comparative Embodiment 1-4 | 1.2 | PP+EP | 15+20 | 3.5 | 10 | 38.5 | 3.43 | 60 | 0.36 | 2.201 | 58.20% |
| Comparative Embodiment 1-5 | 0.001 | \ | \ | \ | \ | \ | \ | 0.004 | \ | 1.525 | 49.50% |
| Comparative Embodiment 1-6 | 0.4 | \ | \ | \ | \ | \ | \ | 1.75 | \ | 1.551 | 51.30% |
| Comparative | \ | PP+EP | 15+20 | \ | \ | 35 | 0 | \ | 0.36 | 1.502 | 55.20% |
| Embodiment 1-7 | | | | | | | | | | | |
| Comparative Embodiment 1-8 | 0.4 | PP+EP | 15+20 | \ | \ | 35 | 1.14 | 1.75 | 0.36 | 1.565 | 55.5% |
| Comparative Embodiment 1-9 | 0.4 | \ | \ | 3.5 | 0 | 3.5 | \ | 1.75 | \ | 1.601 | 51.5% |
| Comparative Embodiment 1-10 | \ | PP+EP | 15+20 | 3.5 | 10 | 38.5 | 0 | \ | 0.36 | 1.572 | 56.5% |
| Comparative Embodiment 1-11 | \ | \ | \ | 3.5 | 0 | 3.5 | \ | \ | \ | 1.558 | 50.80% |

As shown in Table 1, the Al content mass percentage in the positive active material, the mass percentage of the carboxylate in the electrolyte, and the mass percentage of the FEC in the electrolyte in Embodiments 1-1 to 1-25 satisfy: (1) x falls within a range of 0.01 to 1.00; and, (2) 0.3 ≤ m/n ≤ 55. In contrast to Comparative Embodiments 1-1 to 1-11, the open-circuit voltage and the low-temperature discharge capacity retention rate in Embodiments 1-1 to 1-25 are improved greatly. That is because the carboxylate added in the electrolyte can improve the low-temperature discharge performance, and the Al added in the positive active material and the FEC in the electrolyte can effectively alleviate the voltage drop of the battery stored for a period. At the same time, the advantage brought by the carboxylate in terms of the low-temperature discharge is maintained.

Although the improvement effect of the Al added in the positive active material on the low-temperature discharge is limited, the Al in the positive active material can react with the easily decomposable FEC in the electrolyte to form a fast-ion conductor layer like AlF₃ or LiAlF₄ on the surface of the positive active material. On the one hand, the fast-ion conductor layer can reduce the side reactions of the carboxylate on the surface of the positive electrode. On the other hand, the fast-ion conductor layer can maintain a relatively low interfacial resistance. At the same time, the advantage of a low viscosity of the carboxylate can be well exerted, and the low-temperature discharge performance of the electrochemical device is improved.

Dₙ₁₀ of the positive active material is controlled according to Table 2. The voltage drop of the prepared lithium-ion battery fully discharged and stored for a period is tested, and the first-cycle Coulombic efficiency and the high-temperature cycle performance of the battery are tested. Table 2 and Table 3 show the test results.

**Table 2**

| | Mass percentage of Al (x) (%) | Mass percentage of PP+EP (m) (%) | Mass percentage of FEC (n) (%) | Dₙ₁₀ of positive active material (y) (µm) | OCV of battery fully discharged and stored for a period (V) | First-cycle Coulombic efficiency | 4π×y³×x/23 | π×y²/m |
|---|---|---|---|---|---|---|---|---|
| Embodiment 2-1 | 0.01 | 15+20 | 3.5 | 0.1 | 2.21 | 92.60% | <0.001 | |
| Embodiment 2-2 | 0.4 | 15+20 | 3.5 | 0.5 | 2.215 | 92.85% | 0.027 | 0.022 |
| Embodiment 2-3 | 1 | 15+20 | 3.5 | 0.1 | 2.221 | 93.12% | | |
| Embodiment 2-4 | 0.4 | 15+20 | 3.5 | 3 | 2.245 | 93.28% | 5.897 | 0.807 |
| Embodiment 2-5 | 0.2 | 15+20 | 3.5 | 2 | 2.218 | 93.20% | 0.874 | 0.359 |
| Embodiment 2-6 | 0.8 | 15+20 | 3.5 | 2 | 2.256 | 93.35% | 3.49 | 0.359 |
| Embodiment 2-7 | 0.01 | 15+20 | 3.5 | 3 | 2.205 | 93.05% | 0.147 | 0.807 |
| Embodiment 2-8 | 0.4 | 15+20 | 3.5 | 3.5 | 2.244 | 93.25% | 9.36 | 1.1 |
| Embodiment 2-9 | 0.4 | 15+20 | 3.5 | 4 | 2.200 | 90.10% | 13.98 | 1.435 |
| Embodiment 2-10 | 0.4 | 15+20 | 3.5 | 0.05 | 2.120 | 89.22% | < 0.001 | |
| Embodiment 1-3 | 0.4 | 15+20 | 3.5 | 2 | 2.238 | 93.21% | 1.747 | 0.359 |

**Table 3**

| | Mass percentage of Al (x) (%) | Dₙ₁₀ of positive active material (y) (µm) | Carboxylate | | Mass percentage of FEC (n) (%) | π×y²/m | OCV of battery fully discharged and stored for a period (V) | High-temperature cycle capacity retention rate (%) |
|---|---|---|---|---|---|---|---|---|
| | | | Substance | Mass percent age m (%) | | | | |
| Embodiment 1-3 | 0.4 | 2.0 | **PP+EP** | 15+20 | 3.5 | 0.359 | 2.238 | 85.50% |
| Embodiment 3-1 | 0.4 | 3.0 | **PP+EP** | 2+3 | 3.5 | 5.652 | 2.262 | 86.20% |
| Embodiment 3-2 | 0.4 | 2.5 | **PP+EP** | 5+15 | 3.5 | 0.981 | 2.256 | 85.80% |
| Embodiment 3-3 | 0.4 | 0.5 | **PP+EP** | 20+35 | 3.5 | 0.014 | 2.204 | 84.10% |
| Embodiment 3-4 | 0.4 | 1.0 | **PP+EP** | 15+20 | 3.5 | 0.090 | 2.227 | 84.70% |
| Embodiment 3-5 | 0.4 | 1.5 | **PP+EP** | 15+20 | 3.5 | 0.202 | 2.231 | 85.00% |
| Embodiment 3-6 | 0.4 | 0.1 | **PP+EP** | 20+35 | 3.5 | 0.001 | 2.203 | 83.60% |
| Embodiment 3-7 | 0.4 | 3.5 | **PP+EP** | 2+3 | 3.5 | 7.693 | 2.260 | 83.10% |

As shown in Table 2, the doping percentage of Al in the positive active material and the Dₙ₁₀ of the positive active material need to be controlled to fall within an appropriate range (for example, x falls within a range of 0.01 to 1.0, and y falls within a range of 0.1 to 3.5) so that the relatively high open-circuit voltage of the battery fully discharged and stored for a period and first-cycle Coulombic efficiency of the battery can be achieved. That is because the added Al determines the structural stability of the positive active material to some extent. The higher the structural stability of the positive active material, the less the loss of the active lithium, and the higher the exerted capacity. A lower Dₙ₁₀ value of the positive active material particles represents a smaller diameter of the positive active material particles. The small-grained positive active material provides a larger specific surface area, thereby increasing side reactions, and in turn, impairing the structural stability of the positive active material.

As shown in Table 3, when Dₙ₁₀ and the mass percentage of the carboxylate solvent satisfy π×y²/m ≤ 6.0, the storage performance of the lithium-ion battery fully discharged and stored for a period is high, and high cycle performance of the battery is also ensured. That is mainly because the carboxylate is prone to side reactions, the small-grained positive active material accelerates the side reactions, and an appropriate relationship between the two is controlled to ensure the optimal performance of the lithium-ion battery.

A trinitrile compound is added into the electrolyte of the lithium-ion battery. The specific type and mass percentage of the trinitrile compound are shown in Table 4. The voltage drop of the lithium-ion battery fully discharged and stored for a period is tested, and the high-temperature full-charge storage performance of the battery is tested. The test results are shown in Table 4. The preparation method in embodiments in Table 4 is the same as that in Embodiment 1-3 except the type and mass percentage of the trinitrile compound and the mass percentage of Al.

**Table 4**

| Embodiment | Trinitrile compound | | Al Mass percentage x (%) | 300×c×x/27 | OCV of battery fully discharged and stored for a period (V) |
|---|---|---|---|---|---|
| | Substance | Mass percentage c (%) | | | |
| Embodiment 4-1 | Formula (II-1) | 0.1 | 0.4 | 0.4 | 2.239 |
| Embodiment 4-2 | Formula (II-1) | 1 | 0.4 | 4.4 | 2.241 |
| Embodiment 4-3 | Formula (II-1) | 3 | 0.4 | 13.3 | 2.243 |
| Embodiment 4-4 | Formula (II-1) | 5 | 0.4 | 22.2 | 2.230 |
| Embodiment 4-5 | Formula (11-4) | 1 | 0.4 | 4.4 | 2.240 |
| Embodiment 4-6 | Formula (II-5) | 1 | 0.4 | 4.4 | 2.242 |
| Embodiment 4-7 | Formula (II-1) | 3 | 0.8 | 26.7 | 2.228 |
| Embodiment 4-8 | Formula (II-1) | 3 | 0.6 | 20 | 2.240 |
| Embodiment 1-3 | \ | 0 | 0.4 | 0 | 2.238 |

As can be seen from Table 4, the trinitrile compound added in the electrolyte can further increase the open-circuit voltage of the battery fully discharged and stored for a period and further reduce the thickness change rate of the fully charged battery stored at a high temperature. That is because a complexation reaction of the trinitrile compound occurs on the surface of the positive electrode to form an effective protective layer on the surface of the positive electrode, thereby reducing the side reactions at the interface between the positive electrode and the electrolyte and reducing the gas production of the battery in a fully-charged state.

References to "some embodiments", "part of embodiments", "an embodiment", "another example", "example", "specific example" or "some examples" throughout the specification mean that at least one embodiment or example in this application includes specific features, structures, materials, or characteristics described in the mentioned embodiment(s) or example(s). Therefore, descriptions throughout the specification, which make references by using expressions such as "in some embodiments", "in an embodiment", "in one embodiment", "in another example", "in an example", "in a specific example", or "example", do not necessarily refer to the same embodiment or example in this application. In addition, specific features, structures, materials, or characteristics herein may be combined in one or more embodiments or examples in any appropriate manner.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

## Claims

1. An electrochemical device, comprising a positive electrode, a negative electrode, a separator, and an electrolyte, wherein the positive electrode comprises a positive active material, the positive active material comprises aluminum, and, based on a mass of the positive active material, a mass percentage of the aluminum is x%;
the electrolyte comprises carboxylate and fluoroethylene carbonate, and, based on a mass of the electrolyte, a mass percentage of the carboxylate is m%, and a mass percentage of the fluoroethylene carbonate is n%; and
the electrochemical device satisfies: (1) x falls within a range of 0.01 to 1.00; and (2) 0.3 ≤ m/n ≤ 55, and preferably 5 ≤ m/n ≤ 16.

2. The electrochemical device according to claim 1, wherein the electrochemical device further satisfies: (3) m falls within a range of 5.0 to 55.0; and (4) n falls within a range of 1.0 to 15.0.

3. The electrochemical device according to claim 1, wherein the electrochemical device further satisfies: m+n falls within a range of 6.0 to 65.

4. The electrochemical device according to claim 1, wherein the electrochemical device further satisfies: 100x/m falls within a range of 0.2 to 20.

5. The electrochemical device according to claim 1, wherein a Dn₁₀ of the positive active material is y µm, satisfying: 0.1 ≤ y ≤ 3.5.

6. The electrochemical device according to claim 5, wherein the electrochemical device further satisfies: 0.1 ≤ 4π×y³×x/23 ≤ 10, and preferably 1.0 ≤ 4π×y³×x/23 ≤ 10.

7. The electrochemical device according to claim 5, wherein the electrochemical device further satisfies: 0.1 ≤ π×y²/m ≤ 6.0.

8. The electrochemical device according to claim 1, wherein the electrolyte further comprises a trinitrile compound, and the trinitrile compound comprises at least one of the following compounds: 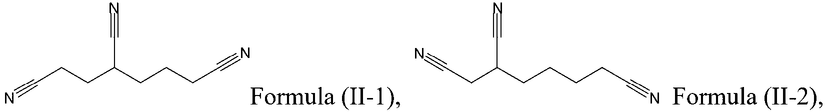 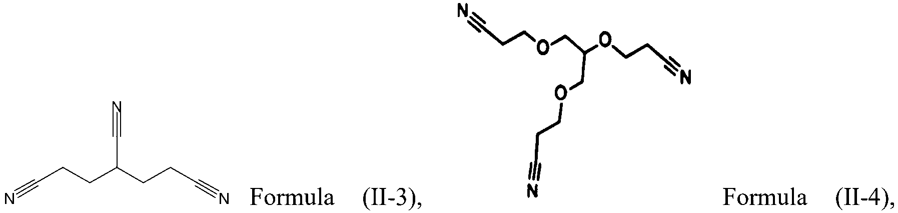 or

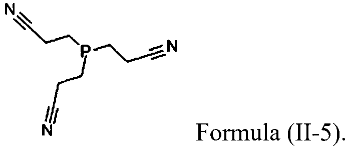

9. The electrochemical device according to claim 8, wherein a mass percentage of the trinitrile compound is c%, and c falls within a range of 0.1 to 5.

10. The electrochemical device according to claim 9, wherein the electrochemical device further satisfies: 300×c×x/27 falls within a range of 0.01 to 20.

11. The electrochemical device according to claim 1, wherein the carboxylate comprises a compound represented by Formula (I): 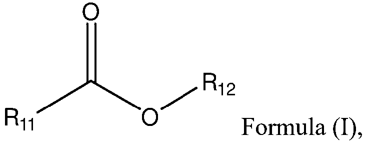 wherein R₁₁ is selected from a substituted or unsubstituted C₁ to C₂ alkyl, and R₁₂ is selected from a substituted or unsubstituted C₁ to C₃ alkyl, in which a substituent for substitution is F.

12. The electrochemical device according to claim 11, wherein the carboxylate comprises at least one of the following compounds:
ethyl propionate, propyl propionate, ethyl acetate, propyl acetate, 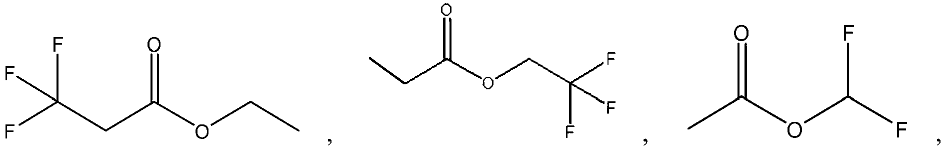 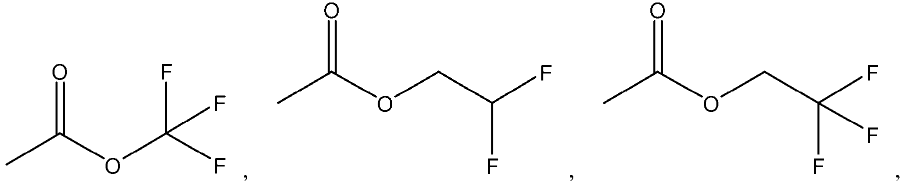 or

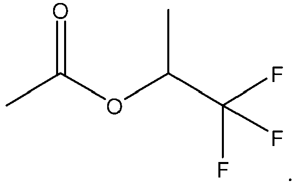

13. An electronic device, wherein the electronic device comprises the electrochemical device according to any one of claims 1 to 12.
